# EUROPEAN PATENT APPLICATION

(11) **EP 0 568 964 A2**
(43) Date of publication of application: **10.11.1993**
(21) Application number: 93107179.9
(22) Date of filing: 03.05.1993
(51) Int. Cl.: G11B 15/68

(54) **Transfer mechanism for magnetic tape cartridges**

(30) Priority: 07.05.1992 US 880142
(71) Applicant: Pierrat, Michel A., Boulder Co 80303 (US)
(72) Inventor: Pierrat, Michel A., Boulder Co 80303 (US)
(74) Representative: Kador & Partner

(57) **Abstract**

In a mechanism (2) for transporting a tape cartridge or cassette, a gripper arm (28) carries two spaced projections (22, 24) that engage one surface of the cartridge. A gripper finger (28), formed of material with sufficient flexibility that any accidental external forces applied to the cartridge will result in release of the cartridge without damage to the case, engages the opposite surface of the cartridge, between the two projections (22, 24). The gripper finger (28) itself moves first in a rotary path to position the gripper finger (28) adjacent one edge of the cartridge and secondly is translated in a direction perpendicular to the surface of the cartridge to be clamped.

The rotary movement of the gripper finger (28) is produced by rotary movement of a flexural beam while the translation is produced by a collar (34) having a cam (46) that impinges on a smooth surface to detect the collar (34) and the gripper finger (28) upwardly to secure the cartridge. The toggle action of the cam (46) eliminates the need for continued external forces to maintain the cartridge in clamped condition. A lost-motion arrangement permits limited rotation of the flexural beam to move the gripper finger (28) into and out of engagement with the cartridge surface without causing any translation of the gripper finger (28).

## Description

This invention relates to a method and apparatus for gripping a tape cassette or cartridge and moving it by means of a robot arm from one position to another. More particularly it relates to such a system particularly adapted for transferring tape cartridges between a storage position and the entrance to a tape drive where the space available for the cartridge gripping and transfer mechanism is strictly limited.

Many different mechanisms have been devised for gripping and transferring tape cartridges but none of them meet the stringent requirements for a practical gripper and transfer mechanism for operation within the space available in existing tape drive configurations. For example, it is a usual practice to provide back-up storage of computer data on magnetic tapes housed in plastic cartridges. It is highly desirable to incorporate the tape drive and a magazine storing a number of tape cartridges in the computer housing without need for external projections. The mechanism for transferring the tapes between the storage magazine and the entrance to the tape drive must be as small as possible in order to leave room for storage of a maximum number of tape cartridges. The more space required for the transfer mechanism, the fewer tape cartridges can be stored in the available space.

In general, mechanisms for handling individual tape cartridges on a selective basis, so that any one of the stored cartridges can be moved into the tape drive, require more room than is available. Accordingly it is more usual to extend the tape transfer mechanism outside the computer housing and to merely move the cartridges along guide paths or channels by pushing on either a single or a number of cartridges. U.S. Patent 5,089,920 to Bryer et al., for example, describes a system in which a cartridge is shoved, without being gripped, from a storage area onto a platform that is outside the computer housing. This platform is then driven by a worm-screw mechanism to transfer the cartridge to a different level.

In order to acquire the advantages of single-cartridge transfer, the transfer mechanisms must (i) take up minimum space so that the gripper and transfer assembly can be fitted into the space typically reserved for peripherals in a computer housing; (ii) be compact and of the requisite shape to permit the cartridge to be inserted as deeply as necessary into the tape drive entrance; (iii) avoid any damage to the case of the tape cartridge such as might be caused by a gripper component dragging across the surface of the cartridge case or resulting from accidental external forces wrenching the cartridge from the transfer mechanism; (iv) be able to accommodate small dimensional differences among different brands of tape cartridges; and (v) eliminate any requirement for continuous external gripping force to be applied to maintain the cartridge in locked position while being transported. In addition, the gripper assembly must be economical to fabricate and have a long and reliable life.

The gripper mechanism described here meets the requirements outlined above and solves a difficult cartridge handling problem. A cartridge clasp, in the embodiment described here in the form of a wire gripper finger, is mounted on a robotic lift arm that travels along an L-shaped path between the tape drive entrance and the storage magazine. The robotic lift arm carries two spaced projections that engage one surface of the cartridge while the gripper finger engages the opposite surface of the cartridge between the two projections. The gripper finger is formed of material with sufficient flexibility that any accidental external forces applied to the cartridge will result in release of the cartridge without damage to the case.

The gripper finger itself moves first in a rotary path to position the finger adjacent to or away from one surface of the cartridge and secondly is translated in a direction perpendicular to the surface of the cartridge to be clamped. The rotary movement of the gripper finger is produced by rotary movement of a flexural beam while the translation is produced by a cam carried by the flexural beam impinging on a smooth surface to detect the flexural beam radially and move the gripper finger into and out of engagement with the cartridge. A lost-motion arrangement permits limited rotation of the flexural beam, to move the gripper finger into and out of engagement with the cartridge surface, without actuating the gripper closing mechanism.

The objects, advantages and other novel features of the present invention are apparent from the following detailed description when read in the light of the appended claims and attached drawings.
Figure 1 is a perspective view showing a cartridge lift mechanism for gripping a tape cartridge, transferring it along an L-shaped path from a first to a second position, and releasing the cartridge;
Figure 2 is an elevational view of the robotic lift arm viewed from the side opposite from that of Figure 1;
Figure 3 is a partial perspective view of the gripper finger and the primary actuating elements for opening and closing the gripper finger;
Figure 4 is a vertical sectional view through the cartridge lift arm with a supported cartridge;
Figure 5 is a partial sectional view along line 5-5 of Figure 4 showing the cartridge gripped between projecting surfaces of the lift arm and the cartridge gripper finger;
Figure 6 is a view similar to Figure 4 in which the cartridge gripper finger has been translated downward to release the grip on the cartridge;
Figure 7 is a partial sectional view along line 7-7 of Figure 6;
Figure 8 is a view similar to Figure 7 in which the cartridge gripper finger has been rotated to remove it from the area immediately adjacent the cartridge;
Figure 9 is an enlarged partial sectional view similar to Figure 5 showing the position of the trigger actuating housing when the cartridge is being gripped;
Figure 10 is a view similar to Figure 9 showing the gripper assembly after release of the pressure between the gripper finger and the cartridge; and
Figure 11 is a view similar to Figure 10 in which further rotation of the gripper collar has removed the gripper finger from the immediate vicinity of the cartridge.

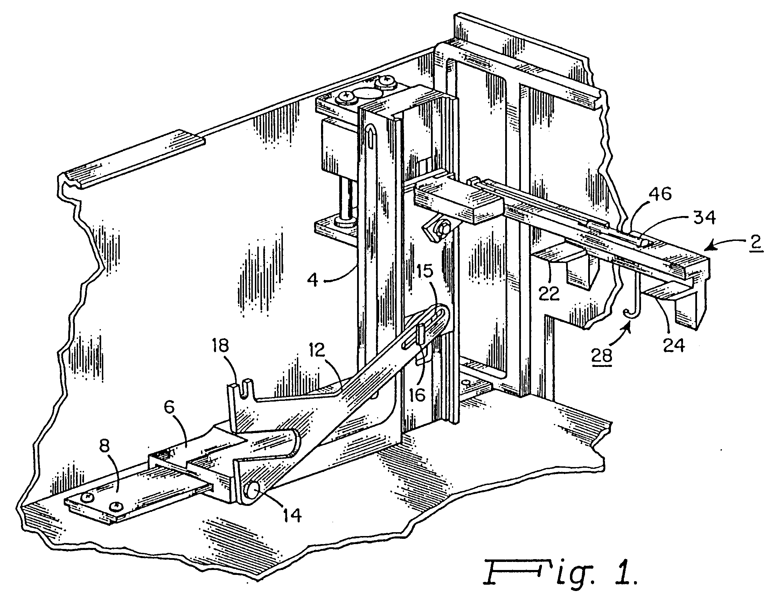

As is shown in Figure 1, a lift arm, generally indicated at 2, is mounted for vertical movement in a stanchion 4 which is carried by a base 6 that is slidably supported for horizontal movement along a track 8. Vertical movement of the lift arm 2 is produced by a triangularly supported control member 12 that is pivoted at 14 to the base 6. The opposite end of the control member 12 has a slot 15 that is slidably connected to a pin 16 in the lift arm 2. To raise and lower the lift arm 2, a horizontal force is applied to the control member at a slot 18 by a drive mechanism (not shown) while the stanchion 4 is restricted from horizontal movement. To move the stanchion 4 together with the lift arm 2 horizontally, the driving force is applied to the slot 18 of the control member 12 while the stanchion is free to move horizontally on the track 8. The mechanism for producing vertical and horizontal movement of the lift arm 2 is identical to that described in European patent application 91 111 339.7 and is not shown here.

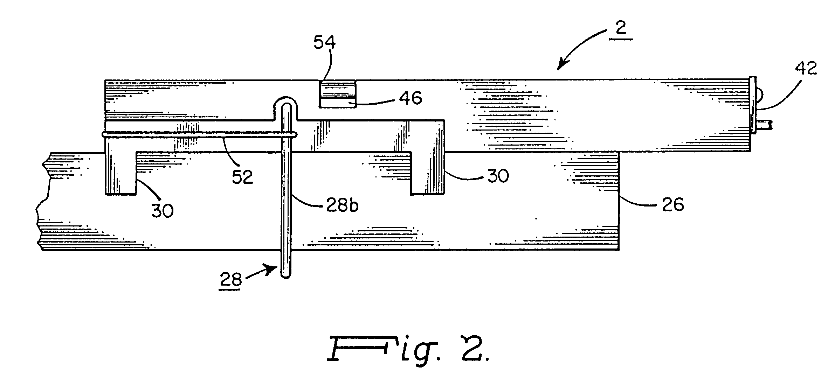

The lift arm 2 has two spaced projections 22 and 24 (Figure 1) that engage the upper surface of a tape cartridge 26. Positioned laterally between these two projections is a vertically extending hook-shaped gripper finger, generally indicated at 28, one end of which engages the surface of the cartridge 26 opposite from the surface engaged by the projections 22 and 24. One edge of the cartridge 26 abuts two stop members 30 (Figures 1 and 2). When an upward translation force is applied to the gripper finger 28, the cartridge 26 is firmly clamped between the end of the trigger finger and the two projections 22 and 24.

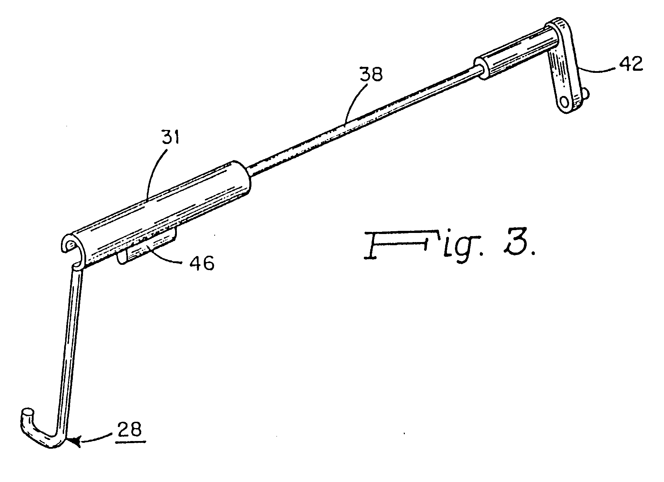

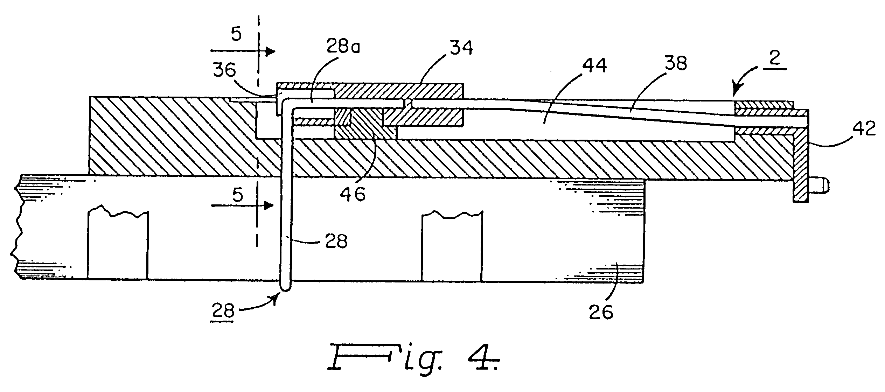

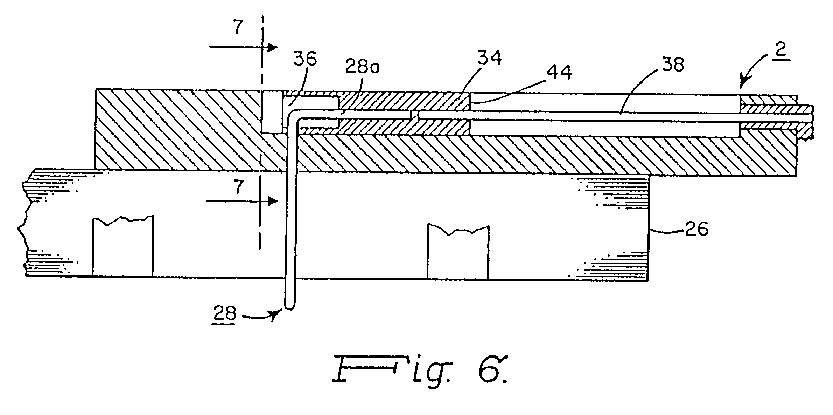

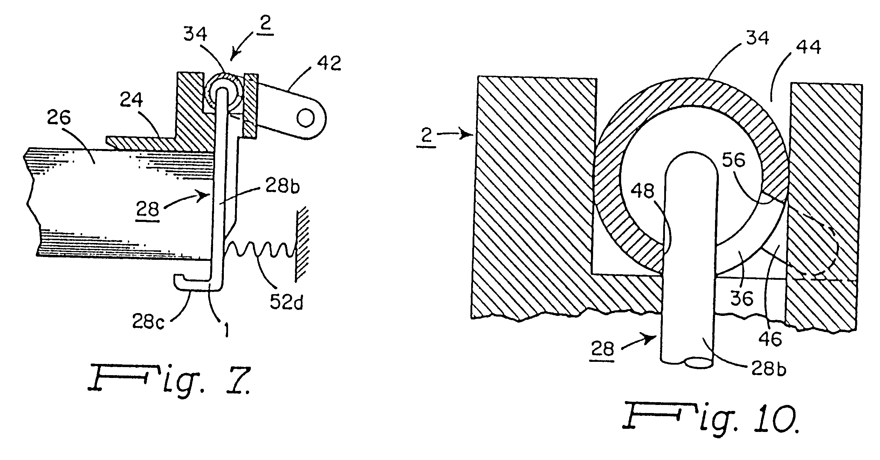

A horizontal extension 28a of the gripper finger 28 (Figures 4 and 6) is rotatably mounted in one end of a control collar 34. The gripper finger extends downward from the extension 28a through a slot 36 in the end of the collar 34. The collar 34 is secured to one end of a torsion/flex rod 38 (see also Figure 3) that may be formed of rather stiff spring wire so that it is capable of transmitting relatively large rotary forces while being subject to moderate flexing in a radial direction. A lever arm 42, positioned within the stanchion 4, is rotatably supported by the arm 2 and is secured to the end of the rod 38 opposite from the collar 34 so that when the arm 42 is rotated, the collar 34 is correspondingly rotated. The collar 34 is positioned in a horizontal groove 44 (see also Figures 9-11) in the lift arm 2 and makes sliding contact with the side walls and floor of the groove 44. The collar 34 is thus free for rotation and for flexing in a vertical direction within the groove 44.

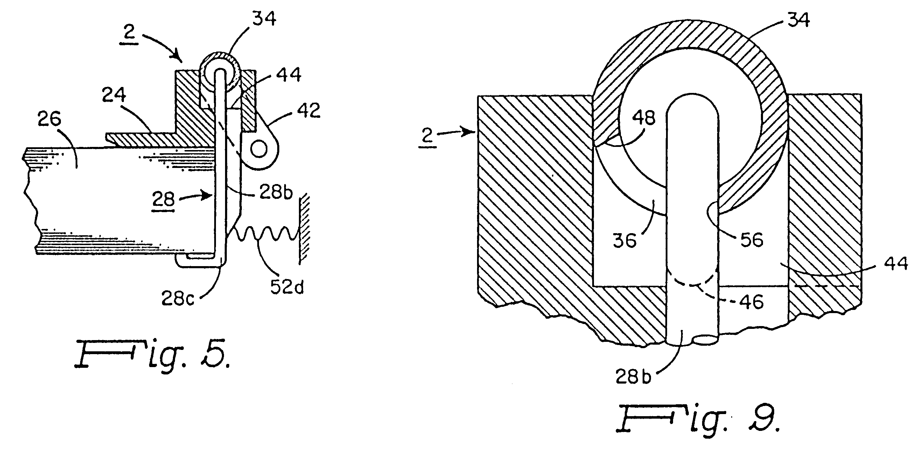

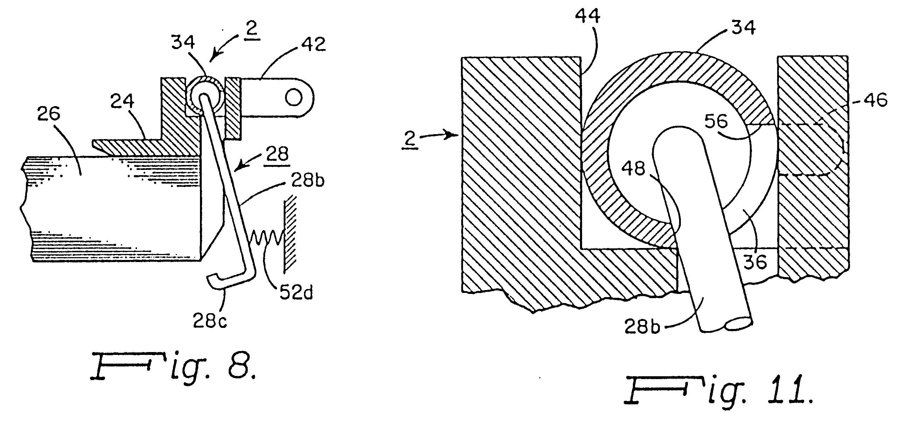

Vertical translation of the gripper finger 28 is produced by a cam 46 that extends radially from the collar 34 and has a rounded outer end that acts, in conjunction with the floor of the groove 44, to wedge the gripper finger upwardly as shown in Figure 5. The cam 46 may take any of various forms, for example, by forming the collar 34 with an oblate cross section. However, a laterally extending cam 46, as described here, is preferred. When the collar 34 is rotated to move the cam 46 toward a horizontal position, the cartridge 26 is released by the downward movement of the gripper finger 28, as shown in Figure 7. The gripper finger 28 is then pivoted about its horizontal extension 28a, as shown in Figure 8, to completely release the cartridge 26. With the gripper finger in this position, the vertical extension 28b of the gripper finger (Figures 7 and 10) engages an opening side 48 of the slot 36 in the collar 34 which holds the gripper finger 28 in its open position against the force of a spring 52 (Figure 2) formed by a short length of spring wire secured at one end to the end of the lift arm 2 and extending laterally across the vertical extension 28b of the gripper finger 28 so that the gripper finger is spring biased toward its vertical or closed position, that is, in a clockwise direction as viewed in Figures 5 and 7-11. The spring bias is indicated diagrammatically at 52d in Figures 5, 7 and 8.

Thus, the gripper finger 28 is moved to its completely open position, as viewed in Figures 8 and 11, by rotation of the lever arm 42 to rotate the collar 34 in a counter clockwise direction (as viewed in Figures 9-11) so that the opening side 48 of the slot 36 forces the gripper finger extension 28b in a counter clockwise direction. In this position, the cam 46 is positioned to extend horizontally into a slot 54 (Figures 1 and 2) in the lift arm 2 extending laterally from the groove 44 to the outer surface of the arm while the collar 34 rests on the floor of the groove 44.

When the lever arm 42 is rotated to drive the torsion/flex rod 38 and collar 34 in a clockwise direction as viewed in Figures 7 and 10, the spring 52 moves the gripper finger 28 in a corresponding direction. During the first thirty or so degrees of this movement, to the position shown in Figures 7 and 10, the gripper finger extension 28b remains in contact with the opening side 48 of the slot 36 while the gripper finger moves to its vertical position with its hook end 28c of the gripper finger 28 directly below the surface of the cartridge 26. The cam 46 remains within the slot 54 and does not generate any upward force on the gripper finger.

With continued rotation of the lever arm 42 in the same direction, no further rotational force is applied to the gripper finger as it traverses the width of the slot 36. The cam 46 now impinges upon the floor of the groove 44 and lifts the collar 34 and the gripper finger 28, as indicated by Figures 5 and 9. To minimize frictional drag during this lifting operation it is preferred that the surface of the groove 44 and the rounded end of the cam 46 be formed of smooth plastic or other low-friction material. The gripper finger extension 28b now abuts a locking side 56 of the slot 36 to lock the gripper finger 28 in its vertical position. The upward movement of the collar 34 and the gripper finger 28 locks the cartridge 26 securely between the hook-end 28c of the gripper finger 28 and the two upper surface projections 22 and 24. While the cartridge is thus secured, the control member 12 is actuated to transfer the cartridge between the tape drive (not shown) and the storage magazine (not shown). During the period when the cartridge is maintained in a locked position, it is not necessary to apply any external force to the cartridge gripper assembly. This minimizes the forces that must be applied to transport the cartridge from one location to another.

When it is desired to transfer a cartridge from the storage magazine to the tape drive entrance, the arm 2 is moved to its lowest position on the stanchion 4 where it engages the cartridge in the exit position of the storage magazine. The gripper finger 28 is then rotated to position its hook end 28c directly beneath the cartridge 26 and then moved upwardly to secure the cartridge to the arm 2. The base 6 is then locked from horizontal movement and the control member 12 actuated to lift the arm 2 and cartridge 26 to its upper position. The base 6 is then released and the stanchion 4 moved horizontally by the control member 12 to bring the cartridge to the entrance to the tape drive. The control collar 34 is then rotated to release the cartridge to the tape drive. To transfer the cartridge back to the storage magazine after ejection by the tape drive, the reverse of the described process carries the cartridge along the same L-shaped path to the storage magazine.

The parts of the system not shown here, including the storage magazine, the tape drive and the mechanisms for controlling and applying the gripper actuating forces to the lever arm 42, are identical with those described in European Patent Application 91 111 339.7, which description is incorporated herein by reference.

## Claims

1. Apparatus for transferring a tape cartridge from a first to a second position, comprising
a cartridge clamp having
projecting means engaging a first surface of said cartridge at spaced points,
a movable clasp positioned adjacent a second surface of said cartridge,
means rotatably supporting said clasp,
drive means for rotating said clasp between first and second positions around an axis generally parallel with said second surface of said cartridge, and
clasp actuating means responsive to the rotation produced by said drive means for translating said clasp in a direction generally perpendicular to said second surface of said cartridge thereby to releasably clamp said cartridge between said clasp and said projecting means, and
means for transporting said clamp and said cartridge from said first to said second position.

2. Apparatus as claimed in Claim 1, wherein said means rotatably supporting said clasp is capable of flexing in a direction generally perpendicular to the plane of said second surface of said cartridge.

3. Apparatus as claimed in Claim 1, wherein said clasp engages said cartridge at a point between said spaced points of said projecting means.

4. Apparatus as claimed in Claim 1, wherein said clasp is a gripper finger formed of spring wire.

5. Apparatus as claimed in Claim 4, wherein said gripper finger includes a hook-shaped end section having an end of said wire engaging the surface of said cartridge.

6. Apparatus as claimed in Claim 1, wherein said clasp actuating means includes a radial projection and a fixed surface whereby said projection impinges on said surface to produce the translating movement of said clasp.

7. Apparatus as claimed in Claim 1, wherein said clamp includes
a lift arm having a longitudinal groove therein,
a torsion flex rod positioned in said groove and having means at one end for imparting a rotary motion to said rod and a collar at the opposite end rotatably supporting said clasp and having a radially extending cam positioned to impinge upon the floor of said groove and thereby produce translational movement of said clasp.

8. Apparatus as claimed in Claim 1, wherein said means rotatably supporting said clasp includes
a collar surrounding an end portion of said clasp, said collar having a slot in the end section thereof with an opening forming one side of the slot and a locking abutment forming the other side of said slot, said sides being separated by a distance significantly greater than the maximum cross sectional dimension of the adjacent portion of said clasp.

9. Apparatus as claimed in Claim 8, including
spring means biasing said clasp toward its locking position.

10. The method of transferring a tape cartridge having first and second opposing parallel surfaces from a first to a second location comprising the steps of
positioning a first surface of said cartridge against a movable arm having at least two spaced areas in contact with said surface,
positioning a rotatably mounted cartridge clasp having a laterally extending clamping section adjacent said cartridge,
rotating said clasp to position said clamping section adjacent a second surface of said cartridge, and
translating said clasp in a direction generally perpendicular to said first and second surfaces thereby to clamp said cartridge between said clasp and said spaced areas of said arm.
